Europäisches Patentamt

European Patent Office

Office européen des brevets

(19)

(11) Veröffentlichungsnummer: **0 179 991**
**B1**

(12) **EUROPÄISCHE PATENTSCHRIFT**

(45) Veröffentlichungstag der Patentschrift:
**26.10.88**

(21) Anmeldenummer: **85109874.9**

(22) Anmeldetag: **06.08.85**

(51) Int. Cl.⁴: **B 60 K 17/34,** F 16 H 37/02

(54) Stufenloses, längseinbaubares Getriebe für ein an zwei Achsen angetriebenes Kraftfahrzeug.

(30) Priorität: **06.10.84 DE 3436759**

(43) Veröffentlichungstag der Anmeldung:
**07.05.86 Patentblatt 86/19**

(45) Bekanntmachung des Hinweises auf die Patenterteilung:
**26.10.88 Patentblatt 88/43**

(84) Benannte Vertragsstaaten:
**AT CH DE FR GB IT LI SE**

(56) Entgegenhaltungen:
**EP - A - 0 086 534**
**EP - A - 0 096 012**
**GB - A - 2 090 348**
**US - A - 2 228 581**
**US - A - 3 282 366**
**US - A - 3 331 464**

(73) Patentinhaber: **AUDI AG, Postfach 220,**
**D-8070 Ingolstadt (DE)**

(72) Erfinder: **Höhn, Bernd-Robert, Dr.,**
**Böhmerwaldstrasse 27, D-8074 Gaimersheim (DE)**
Erfinder: **Dahm, Ernst, Schultheissstrasse 19,**
**D-8070 Ingolstadt (DE)**
Erfinder: **Märkl, Johann, Gartenstrasse 19,**
**D-8079 Wolkertshofen (DE)**

(74) Vertreter: **Engelhardt, Harald, Audi AG Postfach 2 20,**
**D-8070 Ingolstadt (DE)**

## Beschreibung

Die Erfindung betrifft ein stufenloses, längseinbaubares Getriebe für ein an zwei Achsen angetriebenes Kraftfahrzeug gemäss dem Oberbegriff des Patentanspruches 1.

Ein derartiges Getriebe zeigt die EP-A 86 534. Dabei sitzt das Antriebsscheibenpaar des Umschlingungsgetriebes auf einer Zwischenwelle, die über eine schaltbare Übersetzung mit der Antriebswelle des Getriebes verbunden ist. Über eine weitere Zwischenwelle, auf der das Abtriebsscheibenpaar des Umschlingungsgetriebes angeordnet ist, wird dass das Antriebsmoment zu den beiden Achsen verteilende Differential angetrieben. Damit weist dieses bekannte Getriebe vier Wellen auf, die einen entsprechenden Bauraum beanspruchen. Die räumliche Anordnung der Wellen zueinander ist der EP-A 86 534 nicht entnehmbar.

Aufgabe der Erfindung ist es, ein hinsichtlich seiner Bauart kompaktes und besonders robustes Getriebe der gattungsgemässen Art zu schaffen, welches einen günstigen Wirkungsgrad besitzt.

Diese Aufgabe wird erfindungsgemäss mit den kennzeichnenden Merkmalen des Patentanspruches 1 gelöst.

Mit den erfindungsgemässen Merkmalen wird ein stufenloses Kegelscheiben-Umschlingungsgetriebe mit integriertem Differentialgetriebe mit wenigen Zahneingriffen geschaffen, welches einen günstigen Wirkungsgrad sicherstellt. Durch die beschriebene Anordnung der Getriebewellen wird eine kompakte Bauweise erzielt, welche besonders günstig im einem Kraftfahrzeug mit Mittelmotoranordnung verwendbar ist.

Vorteilhafte und zweckmässige Weiterbildungen der Erfindung sind den Ansprüchen 2 bis 6 entnehmbar.

Mittels eines nachgeschalteten Vorgeleges oder eines Kettentriebes gemäss Patentanspruch 2 kann die Drehachse des einen Differential-Abtriebes verlagert werden, um beispielsweise den Antrieb der einen Achse am Motor bzw. an der Brennkraftmaschine vorbei zu ermöglichen. Ein Vorgelege bewirkt zudem eine Drehrichtungsumkehr der entsprechenden Antriebswelle.

Eine hinsichtlich der Bodenfreiheit und des Einbauraumes im Kraftfahrzeug besonders günstige Anordnung der Getriebewellen ist im Patentanspruch 3 angeführt.

Eine die Baulänge des Getriebes verkürzende Anordnung des Zahnrades auf der Zwischenwelle und des Steuerteils für die Übersetzungsänderung am Umschlingungsgetriebe ist im Patentanspruch 4 angeführt. Eine hinsichtlich des Kraftflusses und der konstruktiven Auslegung des Ausgleichsgehäuses des Differentialgetriebes vorteilhafte Massnahme ist dem Patentanspruch 5 entnehmbar.

Der Rückwärtsgang kann in baulich günstiger, einfacher Weise gemäss Patentanspruch 6 ausgeführt sein, in dem das Zwischenrad der Rückwärtsgang-Einrichtung unmittelbar das Differentialgetriebe antreibt.

Ein Ausführungsbeispiel der Erfindung ist im folgenden mit weiteren Einzelheiten näher erläutert. Die schematische Zeichnung zeigt in

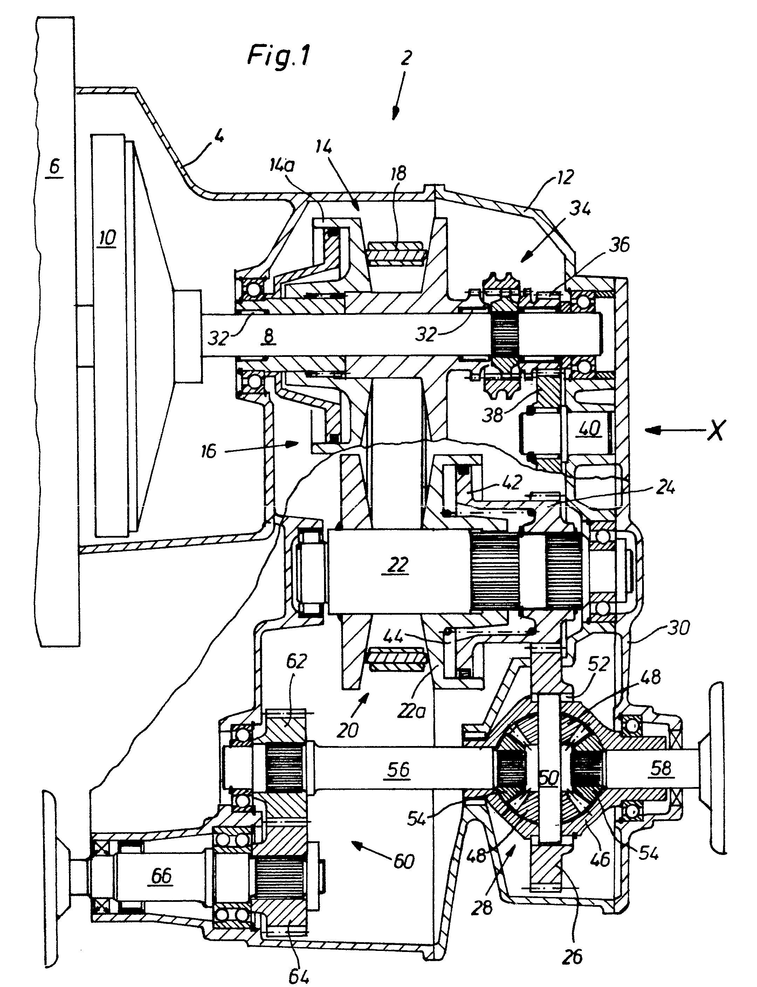

Fig. 1 ein erfindungsgemässes Getriebe im Längsschnitt, wobei jedoch sämtliche Getriebewellen der besseren Darstellung wegen in eine einheitliche Ebene verschwenkt sind, und

Fig. 2 eine Ansicht in Richtung des Pfeiles X der Fig. 1 des Getriebes mit der tatsächlichen Lage der einzelnen Getriebewellen und entferntem Getriebedeckel.

Das stufenlose, längseinbaubare Getriebe 2 ist mittels einem Gehäuseabschnitt 4 an einer im wesentlichen in der Längsmitte eines Kraftfahrzeuges angeordneten Brennkraftmaschine 6 befestigt. Die Antriebswelle 8 des Getriebes 2 ist über eine Reibungskupplung 10 von der Brennkraftmaschine 6 antreibbar.

Die Antriebswelle 8 ist drehbar in einem Gehäuseabschnitt 12 des Getriebes 2 gelagert und trägt ein Antriebsscheibenpaar 14 eines Kegelscheiben-Umschlingungsgetriebes 16. Von dem Antriebsscheibenpaar 14 wird das Antriebsmoment über eine Kette 18 als Zugmittel reibungsschlüssig auf das Abtriebsscheibenpaar 20 des Umschlingungsgetriebes 16 übertragen.

Das Abtriebsscheibenpaar 20 ist auf einer Zwischenwelle 22 angeordnet, welche Zwischenwelle ferner verdrehfest ein Zahnrad 24 trägt.

Das Zahnrad 24 wiederum ist mit einem Zahnrad 26 eines Differentialgetriebes 28 in Eingriff. Das Differentialgetriebe 28 ist innerhalb des Gehäuseabschnittes 12 positioniert und mittels eines Getriebedeckels 30 abgeschlossen, in dem die einzelnen Lager der Getriebewellen aufgenommen sind.

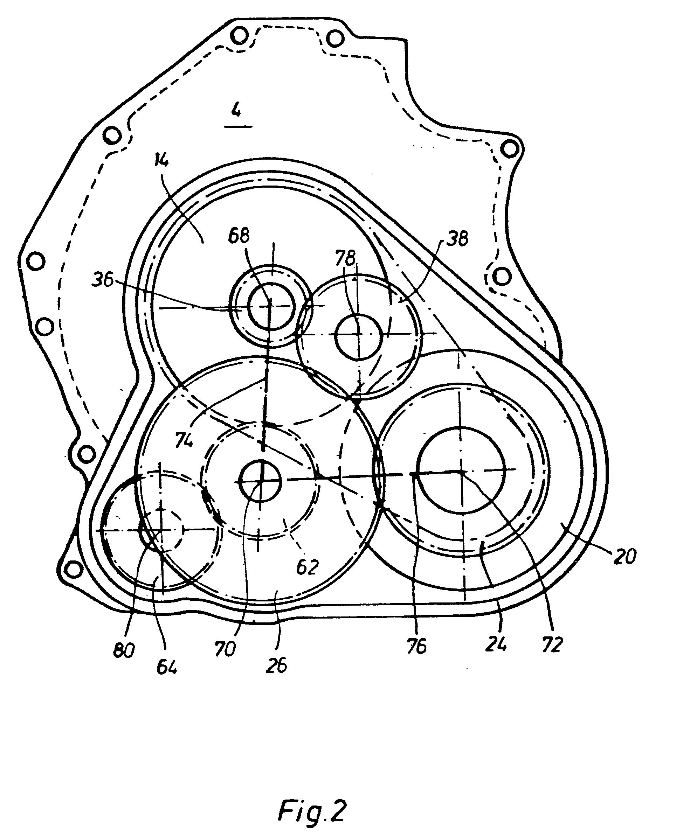

Das Antriebsscheibenpaar 18 ist auf der Antriebswelle 8 unter Zwischenschaltung von Nadellagern 32 verdrehbar gelagert und kann mittels einer Synchronisierkupplung 34 mit der Antriebswelle 8 gekuppelt werden. Benachbart der Synchronisierkupplung 34 ist weiter ein Zahnrad 36 auf der Antriebswelle 8 drehbar gelagert, welches ebenfalls über die Synchronisierkupplung 34 mit der Antriebswelle 8 kuppelbar ist. Das Zahnrad 36 treibt über ein Zwischenzahnrad 38, welches auf einer gehäusefesten Achse 40 drehbar gelagert ist, unmittelbar 36 treibt über ein Zwischenzahnrad 38, welches auf einer gehäusefesten Achse 40 drehbar gelagert ist, das Zahnrad 26 des Differentialgetriebes 28 an (vgl. insbesondere Fig. 2).

Die Scheibenpaare 14, 20 des Umschlingungsgetriebes 16 können in bekannter Weise durch axiales Verschieben der einen Scheibenhälfte 14a bzw. 20a im Sinne einer variablen Übersetzung verstellt werden, wobei diese Verstellung in bekannter Weise hydraulisch erfolgt. Dabei ist der axial unverschiebliche Kolbenteil 42, der mit der Scheibenhälfte 20a eine volumenveränderliche Kammer 44 bildet, unmittelbar an das Zahnrad 24 angeformt.

In dem Ausgleichsgehäuse 46 des Kegelrad-Differentiales 28 sind zwei Planeten-Kegelräder 48 auf einem Bolzen 50 drehbar gelagert. Der Bolzen 50 erstreckt sich diametral durch das Ausgleichsgehäuse 46 und ragt mit seinen Enden formschlüssig in am Innenumfang des Zahnrades 26 ausgebildete Axialnuten 52.

Die Planeten-Kegelräder 48 kämmen mit den Achskegelrädern 54, welche drehfest auf Abtriebswellen 56, 58 angeordnet sind. Die eine Abtriebswelle 58 ist unmittelbar zum Antrieb der Hinterachse des Kraftfahrzeuges vorgesehen.

Der Abtriebswelle 56 ist ein Vorgelege 60 nachgeschaltet, welches innerhalb des Getriebes 2 angeordnet und aus zwei Stirnzahnrädern 62, 64 gleicher Zähnezahl ist. Das Stirnzahnrad 64 wiederum ist auf einer Welle 66 befestigt, welche unmittelbar den Antrieb der Vorderachse des Kraftfahrzeuges herstellt.

Die Getriebewellen sind in herkömmlicher Weise in dem Getriebegehäuse 4, 12, 30 über entsprechende Kugel- oder Rollenlager in paralleler Anordnung zueinander gelagert. Dabei liegt, wie aus der Fig. 2 ersichtlich ist, die Drehachse 68 der Antriebswelle 8 im wesentlichen vertikal oberhalb der Drehachse 70 der Differentialgetriebes 28, während die Drehachse 72 der Zwischenwelle 22 horizontal neben der Drehachse 70 liegt. Die Verbindungsgeraden (gestrichelte Linien 74, 76) zwischen der Drehachse 68 und der Drehachse 70 bzw. der Drehachse 70 und der Drehachse 72 bilden im wesentlichen einen rechten Winkel. Ferner liegt der Drehmittelpunkt 78 des Zwischenzahnrades 38 innerhalb der Peripherie des Umschlingungsgetriebes 16, während die Drehachse 80 der Welle 66 tiefer und seitlich versetzt zur Derhachse 70 angeordnet ist, jedoch nur in einem die Bodenfreiheit des Kraftfahrzeuges nicht beeinträchtigendem Masse.

## Patentansprüche

1. Stufenloses, längseinbaubares Getriebe für ein an zwei Achsen angetriebenes Kraftfahrzeug, mit folgenden Merkmalen:
- ein Kegelscheiben-Umschlingungsgetriebe (16) mit variablem Übersetzungsverhältnis, mit
- einem Antriebsscheibenpaar (14) auf einer Getriebewelle,
- einem Abtriebsscheibenpaar (20) auf einer Zwischenwelle (22);
- einem Differentialgetriebe (28), welches unmittelbar über ein Zahnrad (24) auf der Zwischenwelle (22) angetrieben ist, wobei
- zumindest der eine Antrieb (58) des Differentialgetriebes (28) unmittelbar die eine Achse des Kraftfahrzeuges antreibt;
- die Drehachsen (68, 70, 72) der Getriebewelle, der Zwischenwelle (22) und des Differentialgetriebes (28) liegen parallel zueinander,
  dadurch gekennzeichnet, dass
- die das Antriebsscheibenpaar (14) tragende Getriebewelle unmittelbar die Antriebswelle (8) ist und
- im Vertikalschnitt Verbindungsgerade (74, 76) zwischen der Antriebswelle (8) und dem Differentialgetriebe (28) sowie zwischen dem Differentialgetriebe (28) und der Zwischenwelle (22) im wesentlichen einen rechten Winkel bilden.

2. Getriebe nach Anspruch 1, dadurch gekennzeichnet, dass dem zweiten Abtrieb (56) des Differentialgetriebes (28) ein Vorgelege (60) oder ein Kettentrieb nachgeschaltet ist.

3. Getriebe nach Anspruch 1, dadurch gekennzeichnet, dass die Antriebswelle (8) im wesentlichen oberhalb des Differentialgetriebes (28) und die Zwischenwelle (22) im wesentlichen horizontal neben dem Differentialgetriebe (28) angeordnet ist.

4. Getriebe nach Anspruch 1, dadurch gekennzeichnet, dass der die Scheibenhälfte (20a) des Abtriebsscheibenpaares (20) des Umschlingungsgetriebes (16) verstellende Kolbenteil (42) an das das Differentialgetriebe (18) antreibende Zahnrad (24) angeformt ist.

5. Getriebe nach Anspruch 1, dadurch gekennzeichnet, dass das Differentialgetriebe (28) einen Kegelrad-Ausgleich aufweist, wobei der die Planeten-Kegelräder (48) aufnehmende Bolzen (50) durch das Ausgleichsgehäuse (46) hindurch in das korrespondierende Zahnrad (26) eingreift.

6. Getriebe nach Anspruch 1, dadurch gekennzeichnet, dass auf der Antriebswelle (8) ein schaltbares Zahnrad (36) angeordnet ist, welches bei eingelegtem Rückwärtsgang über ein Zwischenzahnrad (38) unmittelbar das Differentialgetriebe (28) antreibt.

## Revendications

1. Boîte de transmission à variation continue susceptible d'être installée en longueur, pour un véhicule automobile entrîné par deux essieux, comportant une transmission par lien flexible à poulies coniques (16) à rapport de transmission variable, avec une poulie menante (14) sur un arbre d'entraînement et une poulie menée (20) sur un arbre intermédiaire (22), un mécanisme différentiel (28) qui est entraîné directement au moyen d'une roue dentée (24) sur l'arbre intermédiaire (22), l'un au moins des arbres de sortie (58) du mécanisme différentiel (28) entraînant directement l'un des essieux du véhicule automoblie, les axes de rotation (68, 70, 72) de l'arbre d'entraînement, de l'arbre intermédiaire (22) et du mécanisme différentiel (28) étant parallèles entre eux, caractérisée en ce que l'arbre d'entraînement qui porte la poulie menante (14) est directement l'arbre primaire (8), et en ce qu'en coupe verticale, les droites de jonction (74, 76) tracées respectivement entre l'arbre primaire (8) et le mécanisme différentiel (28) et entre le mécanisme différentiel (28) et l'arbre intermédiaire (22) forment un angle pratiquement droit.

2. Boîte de transmission selon la revendication 1, caractérisée en ce qu'une transmission intermédiaire (60) ou une transmission à chaîne est disposée à la suite de la seconde sortie (56) du mécanisme différentiel (28).

3. Boîte de transmission selon la revendication 1, caractérisée en ce que l'arbre primaire (8) est disposé pratiquement au-dessus du mécanisme différentiel (28), et en ce que l'arbre intermédiaire (22) est disposé horizontalement à côté du mécanisme différentiel (28).

4. Boîte der transmission selon la revendication 1, caractérisée en ce que l'élément piston (42) qui déplace la demi-poulie (20a) de la poulie menée (20) de la transmission par lien flexible (16) est formé sur la roue dentée (24) qui entraîne le mécanisme différentiel (28).

5. Boîte de transmission selon la revendication 1, caractérisée en ce le mécanisme différentiel (28) comporte un différentiel à roues coniques, la broche (50) qui porte les roues satellites coniques (48) traversant la cage (46) du différentiel pour s'engager dans la roue dentée corrspondante (26).

6. Boîte de transmission selon la revendication 1, caractérisée en ce qu'il est monté, sur l'arbre primaire (8), une roue dentée embrayable (36) qui entraîne directement le mécanisme différentiel au moyen d'une roue dentée intermédiaire (38) lorsque la marche arrière est enclenchée.

## Claims

1. Infinitely variable gearbox, which can be installed lengthwise, for a motor vehicle driven at two axles, having the following features:
   - a V-pulley transmission (16) having a variable transmission ratio, having
   - an input pulley pair (14) on a gearbox shaft,
   - an output pulley pair (20) on an intermediate shaft (22);
   - a differential (28) which is driven directly via a gearewheel (24) on the intermediate shaft (22),
   - at least one output (58) of the differential (28) driving one axle of the motor vehicle directly;
   - the axes of rotation (68, 70, 72) of the gearbox shaft, of the intemediate shaft (22) and of the differential (28) lie parallel to one another,
   characterized in that
   - the gearbox shaft supporting the input pulley pair (14) is dirctly the drive shaft (8) and
   - in vertical section, the straight lines (74, 76) connecting the drive shaft (8) and the differential (28) and the differential (28) and the intermediate shaft (22) essentially form a right angle.

2. Gearbox according to Claim 1, characterized in that an intermediate gear (60) or a chain drive is connected downstream of the second output (56) of the differential (28).

3. Gearbox according to Claim 1, characterized in that the drive shaft (8) os arranged essentially above the differential (28) and the intermediate shaft (22) is arranged essentially horizontally adjacent to the differential (28).

4. Gearbox according to Claim 1, characterized in that the piston part (42) adjusting the pulley half (20a) of the output pulley pair (20) of the V-pulley transmission (16) is formed on the gear wheel (24) driving the differential (28).

5. Gearbox according to Claim 1, characterized in that the differential (28) has a bevel-gear compensation, thr bolt (50) receiving the epicyclic bevel gear wheel (48) fitting through the differential casing (46) into the corresponding gear wheel (26).

6. Gearbox according to Claim 1, characterized in that a switchable geat wheel (36) which, when reverse gear is engaged, derivate the differential (28) directly via an intermediate gear wheel (38) is arranged on the drive shaft (8).

Fig.1

0 179 991

Fig.2